## Europäisches Patentamt
## European Patent Office
## Office européen des brevets

(19)

(11) Publication number: **0 025 335**
**B1**

(12) **EUROPEAN PATENT SPECIFICATION**

(45) Date of publication of patent specification: **08.06.83**

(51) Int. Cl.³: **G 02 B 23/16, F 41 G 3/22**

(21) Application number: **80303056.8**

(22) Date of filing: **03.09.80**

(54) Stabilisable optical sights and tank gun control system incorporating such an optical sight.

(30) Priority: **05.09.79 GB 7930786**

(43) Date of publication of application:
**18.03.81 Bulletin 81/11**

(45) Publication of the grant of the patent:
**08.06.83 Bulletin 83/23**

(84) Designated Contracting States:
**CH DE FR IT LI NL SE**

(56) References cited:
**DE - A - 1 547 129**
**GB - A - 1 154 882**
**GB - A - 1 450 027**
**US - A - 2 966 063**
**US - A - 3 297 395**
**US - A - 3 378 687**
**US - A - 3 514 619**
**US - A - 3 884 548**
**US - A - 4 118 109**

(73) Proprietor: **THE MARCONI COMPANY LIMITED**
**Marconi House New Street**
**Chelmsford Essex CM1 1PL (GB)**

(72) Inventor: **Garner, Frederick**
**11, All Saints Road**
**Thurcaston Leicestershire (GB)**

(74) Representative: **Rouse, David George**
**Marconi House New Street**
**Chelmsford Essex CM1 1PL (GB)**

Stabilisable optical sights and tank gun control system
incorporating such an optical sight.

This invention relates to optical sights, and concerns in particular an optical sight which is required to be stabilised against movement of the body on which it is carried.

Whilst the invention is applicable generally to optical sights which are required to be stabilised, such as may be used for cameras in some cases, the principal concern of the present invention is optical gun sights for use with the gun control system of fighting tanks.

For a number of years there has been a general requirement that optical devices in the nature of sights should if possible be stabilized against movement of the body upon which the device is carried, so that no matter how — within reason — the body shakes or changes attitude the sight device should continue pointing in the chosen direction. An early use is disclosed in United Aircraft (Schaefer et al.) U.S. Patent No. 2.966,063, for example; a sighting device employs a rather complicated arrangement of lenses and prisms wherein limited compensating movement of the line of sight is effected using two orthogonally-mounted optical members each in the form of a square (four sided) elongate prism, each prism being rotated under gyro control about its long axis to shift the line of sight in the relevant orthogonal direction. A somewhat later suggestion is that in Anschutz German Offenlegungsschrift No. 1,547,129, where there is described an even more complicated apparatus for stabilizing a sighting system against angular shake, which apparatus employs lots of reflectors together with various gyro-controlled prisms, particularly the double prisms of the "Pechan" or like variety, for the purpose of re-erecting the image following reflection. Finally, in McDonnel Douglas U.S. Patent No. 3,884,548 there is described an arrangement for reducing shake in telescopes, binoculars and the like by modifying the line of sight through the system with a combination of gyro-controlled relatively displaceable "fitting" plano-convex and plano-concave lenses which together constitute a prism of variable angle.

However, despite all the interest in the art as regards stabilising sights and similar optical apparatus against movement of the body upon which the device is mounted, there has as yet been no suggestion that a simple rotating wedge combination could be allied to servo apparatus to produce the desired stabilized sight.

The present invention seeks to provide such an improved optical sight, and in particular to provide improved stabilisable gun sights for fighting tanks.

In one aspect, therefore, the invention provides an optical sight to be mounted on a movement-stabilized carrier of a vessel, the sight including two serially-arranged optical wedges disposed on the optic axis between an eye piece and an objective lens for providing compensation of stabilisation error, wherein to rotate the wedges about the optical axis a first mounting is provided to rotate them one relative to the other, and a second mounting is provided to rotate them together.

In an alternative definition of this aspect of the invention, there is provided, especially for use with a fighting tank gun control system which has gun barrel stabilisation apparatus comprising means for developing stabilisation error signals resulting from movement of the tank, and means for utilising the thus-developed stabilisation error signals to drive the tank's gun barrel in elevation and the tank's gun turret in azimuth to provide the required stabilisation, a stabilisable optical sight which comprises:—

an optical system with an eye piece and an objective lens, there being between these two on the system's optical axis a pair of serially-arranged optical wedges mounted on first and second mounting means so as respectively to be rotatable about the optical axis both relatively one wedge with respect to the other and together, whereby the line of sight through the optical system may be moved by rotation of one or each wedge;

driving means for the optical wedges, whereby in operation they may be so rotated; and

means for applying servo control signals to the wedge driving means, whereby in operation the wedges may be so rotated in order to stabilise the sight against movement of a body on which it is carried.

Preferably the two wedges are mounted on parts which are arranged freely to be rotatable within a casing, each part carrying a bevel gear, with the two bevel gears arranged to be driven differentially by a bevel pinion driven by a first servo motor assembly.

Preferably the first servo motor assembly is itself mounted upon a further part which is arranged freely to be rotatable within the casing, which further part is driven by a further servo motor assembly mounted on the casing, whereby operation of the further servo motor assembly causes the further part, the first servo motor assembly and the differential pinion gear to be rotated together, thus causing the two optical wedges to be rotated together.

Preferably each servo motor assembly comprises a servo motor, a gear box drive and a positional transducer, and for each servo motor assembly a servo amplifier control loop is provided comprising an input terminal for error control signals, a comparator connected to derive input from the input terminal and from the output of the positional transducer (usually via scaling means, e.g. a potentiometer), and a servo amplifier connected to the output of the comparator via a signal processing circuit as required, the output of the amplifier being connected to drive the servo motor.

According to a feature of this invention, a gun control system for a fighting tank (the system including a gun barrel stabilisation system comprising means for developing stabilisation error signals resulting from movement of the tank, and means for utilising the thus-developed stabilisation error signals to drive the tank's gun barrel in elevation and the tank's gun turret in azimuth to provide the required stabilisation) incorporates a stabilizing optical sight as described above arranged in operation to receive servo control signals from the system's gun barrel stabilisation apparatus, these signals being applied to the wedge driving means so as to provide compensation for any stabilisation error remaining in the system.

The invention is illustrated in and further described with reference to the accompanying drawings in which:

*Figures 1 to 3* schematically illustrate essential features of a stabilised gun sight in accordance with the present invention; and

*Figure 4* is a section through one practical example of stabilisable gun sight in accordance with the present invention.

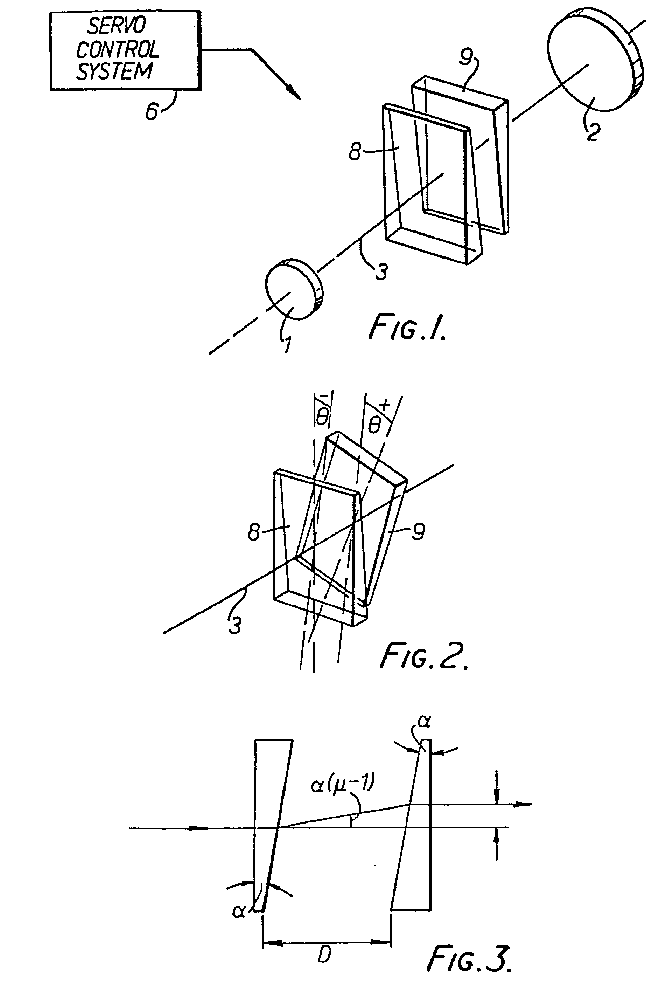

Referring to Figure 1, the sight consists of an eye piece 1 and an objective lens 2 forming an optical system through which the tank gunner looks along a line of sight 3.

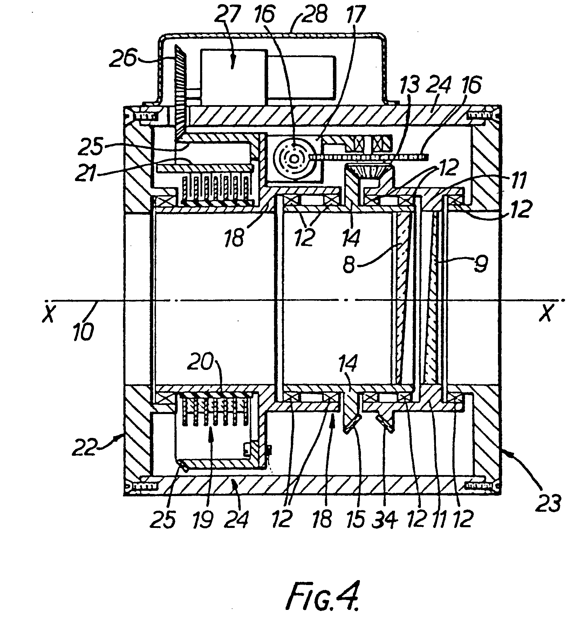

Positioned between the eye piece 1 and the objective lens 2 is a series combination of two optical glass wedges 8 and 9. It will be seen that one is inverted relative to the other. The wedges 8 and 9 are rotatable about the optical axis 3 both one relative to the other and together. Controlling the relative rotation of one wedge with respect to the other and the absolute rotation of the combination of the two wedges will enable the line of sight 3 to be moved in any co-ordinate direction as best seen from Figures 2 and 3.

In Figure 1 the wedges 8 and 9 are shown oriented with their vertical axis in alignment. Figure 2 shows the two wedges 8 and 9 after rotation through angles of $+\theta$ and $-\theta$ respectively. The movement of the scene to the gunner's eye depends upon the geometry of the wedges 8 and 9 (referring to Figure 3 the angle $a$ of the wedges and the spacing D) and also upon the angles $+\theta$ and $-\theta$ through which wedges 8 and 9 have been turned.

The movements of the wedges 8 and 9 are controlled by a servo control system 6 which derives error signals in X and Y co-ordinates which represent the deviation required of the line of sight 3 in order to stabilise the system and take into account gun pointing error arising from movement of the tank. Control signals are applied to driving servos (not shown in Figure 1) of the wedges 8 and 9 in order to provide the required compensating rotation.

It is, of course, well known *per se* to derive such error signals, and the majority of present day fighting tanks are equipped with stabilising systems, based upon gyroscopes for example, and commonly such error signals are utilised to adjust the direction in which the gun barrel is pointing by means of servos adjusting the elevation of the gun barrel and the rotation of a turret carrying the gun barrel. For the purposes of the present explanation it may be assumed that the gun sight schematically illustrated in Figure 1 is utilised in such a tank in which a basic stabilisation system is employed utilising servos to control elevation of the gun barrel and the rotation of the turret. Thus in this case the stabilisation provided within the gun sight itself is not required to achieve total stabilisation but merely to take into account any remaining stabilisation error in the system.

The assembly comprising the wedges 8 and 9 and any driving servos therefor is mounted as a unit such that under control of the gunner the unit may be swung out of the optical path of the system so as to afford the gunner with a "genuine bore sight" view.

Referring to Figure 4 this shows in section an instrument assembly (containing the two wedges 8 and 9) which is interposed between the eye piece 1 and the objective lens 2 of the gun sight represented in Figure 1 in the position occupied in that Figure by lens 4. The optical axis of the assembly is represented at 10. Wedge 9 is mounted upon a part 11 which is freely rotatable about the optical axis 10 on bearings 12. The part 11 housing wedge 9 is formed with a flange on which is cut a bevel gear 34 which engages with a bevel pinion 13.

Wedge 8 is mounted upon another part 14 which is also arranged to be freely rotatable about the axis 10 by means of bearings 12. Part 14 is also formed with a flange upon which a bevel gear 15 is cut.

Bevel gear 15 is also in mesh with bevel pinion 13 so that when bevel pinion 13 is rotated bevel gears 34 and 15 are driven differentially.

Bevel pinion 13 is driven by a worm and wheel gear assembly 16 by means of a motor/gear box assembly 17.

Whilst not separately represented, the motor/gear box assembly 17 also includes a positional transducer in the form of a digital encoder or an AC resolver or a conducting plastics potentiometer.

As will now be appreciated, as bevel gear 13 is turned via the gear assembly 16 by motor/gear box 17 a differential movement is imparted to the two optical wedges 8 and 9 with respect to a third, freely rotatable, part 18 which houses the motor/gearbox 17. Third part 18 carries a slip ring assembly 19 consisting of polished coin silver slip rings spaced by insulating shims and insulated from part 18 by an insulating tube 20. A brush holder 21 carries precious metal wire brushes which contact the slip rings of slip ring assembly 20. Flying leads to the brushes of brush gear holder 21 are taken via a suitable grommet in one end cover 22 of the assembly. The slip rings and brush gear assembly 19 and 21 permit supplies and positional feedback signals to be routed to and from the differential wedge-driver motor/gearbox assembly 17. The whole assembly so far described is encased by the aforementioned end cover 22, an opposite end cover 23 and an outer cylindrical main frame 24.

In order to provide for absolute rotation of the optical glass wedges 8 and 9 together, the freely rotatable part 18 is itself provided with a gear 25 which is meshed with a driving bevel gear 26 extending through a suitable aperture in the main frame 24. Bevel gear 26 is itself driven by a second motor/gearbox/positional transducer assembly 27 fixedly mounted to the outside of main frame 24 and housed under a protective cover 28.

Thus, by applying suitable servo control signals to motor assembly 27 the wedges 8 and 9 can be rotated together about the axis 10 whilst the relative rotation of the wedges 8 and 9 may be determined by servo control signals applied to the motor assembly 17. As will be appreciated, referring again to Figure 3, the relative rotation of the wedges 8 and 9 will determine the magnitude of the shift, and the absolute rotation of the wedges 8 and 9 together will determine its spatial angle (up, down, left, right, and so on).

## Claims

1. An optical sight to be mounted on a movement-stabilized carrier of a vessel, the sight including two serially-arranged optical wedges (8, 9) disposed on the optic axis (3) between an eye piece (1) and an objective lens (2) for providing compensation of stabilisation error, wherein to rotate the wedges about the optical axis (3) a first mounting (11, 14, 16, 17) is provided to rotate them one relative to the other, and a second mounting (18, 26, 27) is provided to rotate them together.

2. A stabilisable optical sight suitable for use with a fighting tank gun control system which has gun barrel stabilisation apparatus comprising means for developing stabilisation error signals resulting from movement of the tank, and means for utilising the thus developed stabilisation error signals to drive the tank's gun barrel in elevation and the tank's gun turret in azimuth to provide the required stabilisation, which sight comprises:—

an optical system with an eye piece (1) and an objective lens (2), there being between these two on the system's optical axis (3) a pair of serially-arranged optical wedges (8, 9) mounted on first and second mounting means (11, 14 and 18, 26) so as respectively to be rotatable about the optical axis both relatively one wedge with respect to the other and together, whereby the line of sight through the optical system may be moved by rotation of one or each wedge;

driving means (17, 27) for the optical wedges, whereby in operation they may be so rotated; and

means for applying servo control signals to the wedge driving means, whereby in operation the wedges may be so rotated in order to stabilise the sight against movement of a body on which it is carried.

3. A sight as claimed in either of the preceding claims, wherein for the first mounting means the two wedges (8, 9) are mounted on parts (11, 14) which are arranged freely to be rotatable within a casing (24), each part carrying a bevel gear (34, 15), with the two bevel gears arranged to be driven differentially by a bevel pinion (13) driven by a first servo motor assembly (17).

4. A sight as claimed in claim 3, wherein for the second mounting means the first servo motor assembly (17) is itself mounted upon a further part (18) which is arranged freely to be rotatable within the casing (24), which further part (18) is driven by a further servo motor assembly (27) mounted on the casing, whereby operation of the further servo motor assembly causes the further part (18), the first servo motor assembly (17) and the differential pinion gear (13) all to be rotated together, thus causing the two optical wedges to be rotated together.

5. A sight as claimed in claim 4, wherein each servo motor assembly (17, 27) comprises a servo motor, a gear box drive and a positional transducer, and for each servo motor assembly a servo amplifier control loop is provided comprising an input terminal for error control signals, a comparator connected to derive input from the input terminal and from the output of the positional transducer, and a servo amplifier connected to the output of the comparator via a signal processing circuit as required, the output of the amplifier being connected to drive the servo motor.

6. A fighting tank gun control system which has gun barrel stabilisation apparatus comprising means for developing stabilisation error signals resulting from movement of the tank, and means for utilising the thus developed stabilisation error signals to drive the tank's gun barrel in elevation and the tank's gun turret in azimuth to provide the required stabilisation, which gun control system incorporates a stabilisable optical sight as claimed in any of claims 2 to 5 arranged in operation to receive servo control signals from the system's gun barrel stabilisation apparatus, these signals being applied to the wedge driving means so as to provide compensation for any stabilisation error remaining in the system.

## Revendications

1. Un viseur optique à monter sur un support stabilisé en mouvement d'un navire, le viseur comprenant deux prismes optiques en toît (8, 9) disposés en série sur l'axe optique (3) entre un oculaire (1) et une lentille (2) pour assurer la compensation de l'erreur de stabilisation, où pour faire tourner les prismes en toît autour de l'axe optique (3), un premier équipage (11, 14, 16, 17) fait tourner ces prismes l'un par rapport à l'autre tandis qu'un deuxième équipage (18, 26, 27) les fait tourner ensembles.

2. Un viseur optique stabilisable convenant à l'utilisation avec un système de conduite de tir pour char d'assaut, lequel système comprend un appareillage de stabilisation du fût du canon comprenant des moyens permettant de générer des signaux d'erreur de stabilisation résultant du mouvement du char et des moyens d'utiliser lesdits signaux d'erreur de stabilisation ainsi développés pour entraîner le fût du canon du char en élévation et la tourelle de canon du char en azimut de façon à assurer la stabilisation requise, lequel viseur comprend:

un système optique avec un oculaire (1) et une lentille (2), avec entre ces deux éléments et sur l'axe optique du système (3) deux prismes optiques en toît en série (8, 9) montés sur un premier et un deuxième équipage (11, 14 et 18, 26) afin de pouvoir respectivement tourner autour de l'axe optique à la fois l'un par rapport à l'autre et ensembles; la ligne de foi du système optique pouvant être déplacée par rotation de l'un ou l'autre des prismes en toît;

des moyens d'entraînement (17, 27) pour les prismes optiques afin qu'on puisse les faire tourner en fonctionnement; et

des moyens pour appliquer des signaux de servo-commande aux moyens d'entraînement des prismes en toît afin qu'en fonctionnement les prismes en toît puissent pivoter afin de stabiliser le viseur par rapport au mouvement d'un corps sur lequel il est monté.

3. Un viseur suivant l'une ou l'autre des revendications précédentes où pour le premier montage les deux prismes en toît (8, 9) sont montés sur des pièces (11, 14) qui sont disposées librement à l'intérieur d'une enceinte (24), chaque pièce supportant un engrenage cônique (34, 15), avec les deux engrenages côniques disposés de façon à être entraînés différentiellement par un pignon cônique (13) lui-même entraîné par un premier ensemble servo-moteur (17).

4. Un viseur suivant la revendication 3 où pour le deuxième montage, le premier ensemble servo-moteur (17) est lui-même monté sur un autre pièce (18) qui est disposée de façon à tourner librement à l'intérieur de l'enceinte (24), laquelle autre pièce (18) est entraînée par un autre ensemble servo-moteur (27) monté sur l'enceinte, le fonctionnement de cet autre ensemble servo-moteur déclenchant la rotation ensemble de l'autre pièce (18), du premier ensemble servo-moteur (17) et du pignon différentiel (13), ce qui provoque également la rotation ensemble des deux prismes optiques en toît.

5. Un viseur selon la revendiation 4 où chaque ensemble servo-moteur (17, 27) comprend un servo-moteur, un entraînement par boîte d'engrenage et un transducteur de position tandis qu'il est prévu pour chaque ensemble servo-moteur une boucle de commande à servo-amplificateur comprenant une borne d'entrée pour les signaux de commande d'erreur, un comparateur connecté de façon à dériver l'entrée de la borne d'entrée et de la sortie du transducteur de position et un servo-amplificateur connecté à la sortie du comparateur en passant par un circuit de traitement du signal comme requis, la sortie de l'amplificateur étant connectée de façon à entraîner le servo-moteur.

6. Un système de conduite de tir de char d'assaut qui comporte un appareillage de stabilisation du fût du canon comprenant des moyens pour générer des signaux d'erreur de stabilisation résultant des mouvements du char et des moyens d'utilisation desdits signaux d'erreur de stabilisation ainsi générés pour entraîner le fût du canon du char en élévation et la tourelle du canon du char en azimut pour assurer la stabilisation requise, lequel système de conduite de tir comprend un viseur optique stabilisable selon l'une des revendications 2 à 5, conçu de façon a recevoir pendant le fonctionnement des signaux de servo-commande de l'appareillage de stabilisation du fût du canon, ces signaux étant appliqués aux moyens d'entraînement des prismes en toît afin d'assurer la compensation de toute erreur de stabilisation demeurant dans le système.

**Patentansprüche**

1. Auf einem bewegungsstabilisierten Träger eines Behälters angeordnetes optisches Visiergerät mit zwei in Reihe in der optischen Achse (3) zwischen einem Okular (1) und einer Objektivlinse (2) angebrachten optischen Keilen (8, 9) zum Ausgleich des Stabilisierungsfehlers, dadurch gekennzeichnet, dass eine erste Befestigungseinrichtung (11, 14, 16, 17) zum relativen Drehen besagter Keile zueinander und eine zweite Befestigungseinrichtung zum gemeinsamen Drehen besagter Keile zum Drehen derselben um die optische Achse (3) vorgesehen sind.

2. Zur Anwendung bei einem Feuerleitsystem eines Kampfpanzers geeignetes stabilisierbares optisches Visiergerät mit einer aum Einrichtungen zum Entwickeln von sich aus der Bewegung des Panzers ergebenden Stabilisierungssignalen bestehende Geschützrohr-Stabilisierungsvorrichtung und Einrichtungen, durch welche die auf diese Weise entwickelten Stabilisierungsfehlersignale zum Antrieb des Geschützrohrs in die Richthöhe und zum Antrieb des Panzer-Geschützturms im Azimut ausgewertet werden, um die geforderte Stabilisierung zu erreichen, dadurch gekennzeichnet, dass das Visiergerät aus Folgendem besteht:

5

ein optisches System mit einem Okular (1) und einer Objektlinse (2), zwischen diesen beiden ein Paar auf der optischen Achse in Reihe angeordnete optische Keile (8, 9), die auf ersten und zweiten Befestigungseinrichtungen (11, 14 und 18, 26) derart angeordnet sind, dass der eine Keil relativ zum anderen sowie beide gemeinsam drehbar sind und die Sichtlinie durch das optische System durch Drehung eines bzw. jedes Keils geändert werden kann;

Antriebseinrichtungen (17, 27) für die optischen Keile, damit besagte Keile im Betrieb wie beschrieben gedreht werden können; und Einrichtungen zum Anlegen von Servo-Steuersignalen an die Keil-Antriebseinrichtungen, damit die Keile im Betrieb derart gedreht werden können, dass das Visiergerät gegenüber Bewegungen eines sie tragenden Körpers stabilisiert ist.

3. Visiergerät nach einem der vorhergehenden Ansprüche, dadurch gekennzeichnet, dass bei der ersten Befestigungseinrichtung die beiden Keile (8, 9) an frei in einem Gehäuse (24) drehbaren Teilen (11, 14) befestigt sind, wobei jedes Teil ein Kegelzahnrad (34, 15) trägt und die beiden Kegelzahnräder zum differentialen Antrieb derselben von einem, durch eine erste Servomotorgruppe (17) angetriebenes Kegelritzel (13) ausgebildet sind.

4. Visiergerät nach Anspruch 3. dadurch gekennzeichnet, dass bei der zweiten Befestigungsvorrichtung die erste Servormotorgruppe (17) selbst an einem weiteren im Gehäuse (24) frei drehbaren Teil (18) befestigt ist, das von einer weiteren, am Gehäuse angebrachten, Servomotorgruppe (27) angetrieben ist und Betrieb der weiteren Servormotorguppe, gemeinsame Drehung des weiteren Teils (18), der ersten Servomotorgruppe (17) und des Differential-Kegelritzes (13) bewirkt, wodurch die beiden optischen Keile gemeinsam gedreht werden.

5. Visiergerät nach Anspruch 4, dadurch gekennzeichnet, dass jede Servomotorgruppe (17, 27) aus einem Servormotor, einem Getriebe und einem Weggeber besteht und für jede Servomotorgruppe eine Servoverstärker-Regelschleife vorgesehen ist, die aus einer Eingangsklemme für Fehlersteuersignale, einer zum Ableiten eines Eingangs von der Eingangsklemme und vom Ausgang des Weggebers geschalteten Vergleicherschaltung und aus einem nach Bedarf über eine Signalaufbereitungsschaltung an den Ausgang der Vergleicherschaltung angeschlossenen Servoverstärker besteht, dessen Ausgang zum Antrieben des Servomotors ausgebildet ist.

6. Ein Feuerleitsystem in einem Kampfpanzer mit Geschützrohr-Stabilisierungsvorrichtung, bestehend aus Einrichtungen zum Entwickeln von sich aus den Bewegungen des Panzers ergebenden Stabilisierungsfehlersignalen, durch welche die auf diese Weise entwickelten Stabilisierungsfehlersignale zum Antrieb des Geschützrohrs in die Richthöhe und zum Antrieb des Panzer-Geschützturms im Azimut ausgewertet werden, um die geforderte Stabilisierung vorzusehen, wobei das Feuerleitsystem ein stabilisierbares optisches Visiergerät nach Anspruch 2—5 enthält, welches im Betrieb zum Empfang von Servosteuersignalen der Geschützrohr-Stabilisierungseinrichtung des Systems ausgebildet ist, um im System verbleibende Stabilisierungsfehler auszugleichen.

FIG.1.

FIG.2.

FIG.3.

O 025 335

Fig.4.